# EUROPEAN PATENT APPLICATION

(11) **EP 3 739 543 A1**
(43) Date of publication of application: **18.11.2020**
(21) Application number: 18899299.4
(22) Date of filing: 06.11.2018
(51) Int. Cl.: G06Q 40/00

(54) **OPERATION MANAGEMENT SYSTEM AND OPERATION MANAGEMENT METHOD**

(30) Priority: 12.01.2018 JP 2018003428
(71) Applicant: Atrris Corporation, Tokyo 158-0097 (JP)
(72) Inventor: YASUMITSU, Masanori, Tokyo 158-0097 (JP); OUCHI, Takanobu, Tokyo 158-0097 (JP); YOKOOHJI, Seiichi, Tokyo 158-0097 (JP)
(74) Representative: D Young & Co LLP
(86) International application number: PCT/JP2018/041116
(87) International publication number: WO 2019/138670

(57) **Abstract**

Provided is a business management system that allows easily validating data at a later date even when a specification or an accounting rule is changed. The business management system includes a reception unit, a journal rule management unit, a journalizing engine, and a first output unit. The reception unit is configured to receive business event data. The journal rule management unit is configured to manage a journal rule to journalize the business event data. The journalizing engine is configured to journalize the business event data in accordance with the journal rule to generate journal data. The first output unit is configured to associate the journal rule and the business event data with the journal data generated by the journalizing engine and output the journal data.

## Description

### Technical Field

The present invention relates to a business management system and a business management method.

### Background Art

A business management system to manage a core business of a company has been widely known, and a system to perform its development also has been known by, for example, Patent Literature 1.

A market environment surrounding companies has been changing day by day, and business know-how of each company has been changing in rapid progress. Under such a situation, the business management system is demanded to be a system that can timely provide necessary information to users of the information and flexibly handles a daily-changing environment. Therefore, changes in specifications, accounting rules, or the like are desired for a core business system on demand.

However, when specifications and/or accounting rules of the business management system are changed in the conventional business management system, computer programs are required to be changed. In this case, data becomes inconsistent between data before and after the program change, thereby causing a problem that data validation at a later date becomes difficult.

### Citation List

### Patent Literature

Patent Literature 1: JP 2010-55562 A

### Summary of Invention

### Technical Problem

To solve such a problem, an object of a business management system and a business management method according to the present invention is to provide the business management system that allows easily validating data at a later date even when a specification and/or an accounting rule is changed.

### Solution to Problem

A business management system according to an embodiment of the present invention includes a reception unit, a journal rule management unit, a journalizing engine, and a first output unit. The reception unit is configured to receive business event data. The journal rule management unit is configured to manage a journal rule to journalize the business event data. The journalizing engine is configured to journalize the business event data in accordance with the journal rule to generate journal data. The first output unit is configured to associate the journal rule and the business event data with the journal data generated by the journalizing engine and output the journal data.

According to this business management system, the journal rule management unit manages the journal rule to journalize the business event data. When the business event data is received through the reception unit, the journalizing engine journalizes the business event data in accordance with the journal rule to generate the journal data. The output unit associates the journal rule and the source business event data with this journal data and outputs the journal data.

The journal rule managed by the journal rule management unit is appropriately changeable by updating a multidimensional journal pattern master according to, for example, a change in specification of business or a change in an accounting rule. Even when such a change has been performed, the business event data before the change is journalized in accordance with the journal rule before the change, and the journal rule before the change and the business event data before the change are associated with the generated journal data. Meanwhile, the business event data after the change is journalized in accordance with the journal rule after the change, and the journal rule after the change and the business event data after the change are associated with the generated journal data. Thus, according to the present invention, all pieces of the business event data are journalized based on the journal rule and the journal rule data used for the journal and the source business event data are associated with the generated journal data, and therefore the data is easily validated at a later date. As one example, even when an accounting rule is changed, it is clear what sort of journal rule based on which the journal data has been categorized and generated, and what the source business event data is like, thus ensuring easy examination of validity of the data.

This business management system is configured to further include an aggregation rule management unit, an AET framework, and a second output unit. The aggregation rule management unit is configured to manage an aggregation rule for data processing on the journal data. The AET framework is configured to perform the data processing on the journal data in accordance with the aggregation rule to generate ledger data. The second output unit is configured to associate the journal rule, the aggregation rule, and the business event data with the ledger data and output the ledger data.

The aggregation rule can be generated in accordance with account titles required in the accounting data desired to be generated. Even when the accounting data based on a plurality of different accounting standards is required, it becomes possible to simultaneously generate the accounting data based on the plurality of accounting standards by preliminary generating the aggregation data in accordance with the plurality of accounting standards. Additionally, this also allows simultaneously generating, for example, consolidated accounting data and accounting data for single entity. Using one set of accounting data, financial statements based on the International Accounting Standards and financial statements based on the Japanese Accounting Standards can be simultaneously generated. Further, financial accounting data and management accounting data can be simultaneously generated.

### Brief Description of Drawings

Fig. 1 is a block diagram illustrating an overall configuration of a business management system according to an embodiment.
Fig. 2 is a block diagram illustrating an example of a hardware configuration of the business management system.
Fig. 3 is a function block diagram illustrating a configuration example of a journalizing engine 12.
Fig. 4 is a flowchart depicting a procedure for generating journal data from business event data.
Fig. 5 is a flowchart depicting a procedure for generating ledger data from the journal data.

### Description of Embodiments

The following describes embodiments with reference to the accompanying drawings. Although the accompanying drawings illustrate the embodiments and examples of implementation according to a principle of this disclosure, these drawings are for understanding of this disclosure and never used for limited interpretation of this disclosure. The descriptions of this specification are merely typical examples and therefore do not limit the claims or application examples of this disclosure by any means.

While the embodiments give the description in detail enough for a person skilled in the art to carry out this invention, it is necessary to understand that other implementations and configurations are possible and that changes in configurations and structures and substitutions of various components can be made without departing from the scope or the spirit of the technical idea of this disclosure. Therefore, the following description should not be interpreted to be limited.

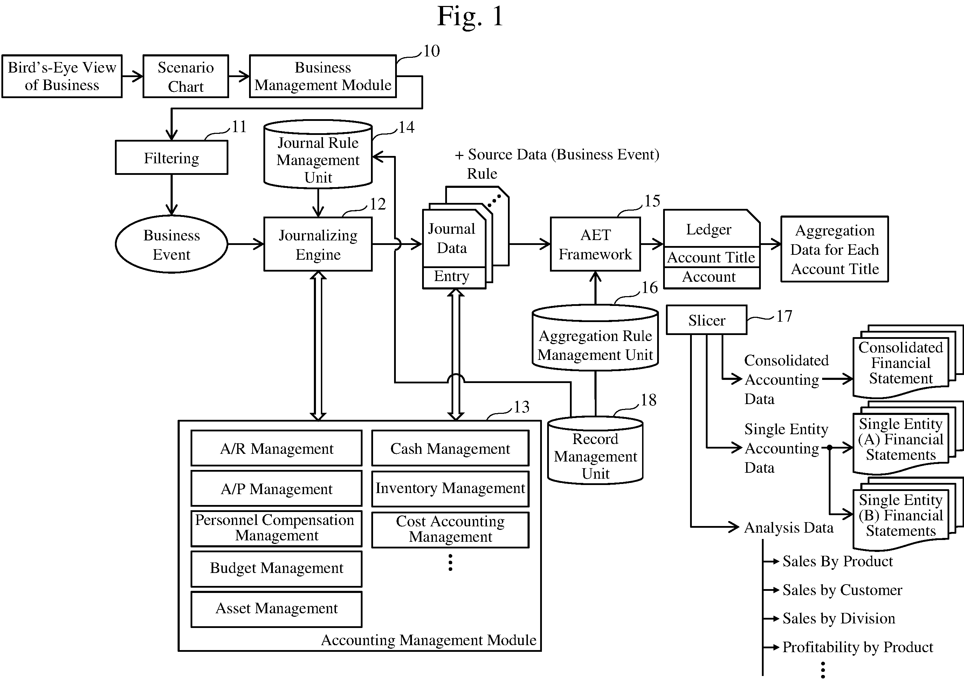

The following describes an overall configuration of a business management system according to the embodiments with reference to Fig. 1. The business management system can roughly include a business management module 10, a filtering module 11, a journalizing engine 12, an accounting management module 13, a journal rule management unit 14, an AET framework 15, an aggregation rule management unit 16, a slicer 17, and a record management unit 18. The business management system is configured to journalize the business event data, which is received from the business management module 10 and input to the journalizing engine 12 via the filtering module 11 in accordance with journal rule data managed by the journal rule management unit 14. The data journalized by the journalizing engine 12 is treated as journal data.

The business management module 10 has a role that obtains and manages various kinds of business event data (for example, sales data, purchase data, inventory data, production data, shipping data, and personnel data) based on a result of business analysis. The various kinds of business event data may be managed by being divided into, for example, sales management, purchase management, inventory management, production management, physical distribution management, procurement management, and personnel management according to a type of business.

The filtering module 11 has a role that extracts the business event data to be journalized among the business event data included in the business management module 10.

As one example, the business event data can be extracted from a bird's-eye view of business generated in accordance with results of interviews regarding business and a scenario chart generated based on the bird's-eye view of business. The bird's-eye view of business abstracts and illustrates an entire perspective of the business that should be systematized with "events," a "core," and drawings showing a relationship between these items. This is a bird's-eye view that expresses the entire business of a company in a macroscopic point of view and is understandable by a plurality of persons. The scenario chart can be generated based on data included in the generated bird's-eye view of business. Note that the bird's-eye view of business and the scenario chart have been described in Japanese Patent Application No. 2016-243706, which has been previously filed by this applicant.

The journalizing engine 12 has a role that journalizes the business event data extracted in accordance with the journal rule data stored in the journal rule management unit 14 to generate the journal data. As described later, the journal rule data is determined in accordance with accounting data to be generated and is further determined based on various kinds of information (for example, a kind of an action of the event, a subject of the event, a target, a type of an article, a client, a type of money, a country, and a date and time) included in the business event data. As one example, for example, when the business event data relates to a purchase (procurement) of 10,000 yen from a supplier of a merchandise A, two kinds of the journal data, which are merchandise data of the merchandise A and accounts payable data of the merchandise A, are generated from the business event data. As one example, the journal rule with which data regarding a procurement of a merchandise is journalized into the merchandise data and the accounts payable data is set, and the journalizing engine 12 journalizes the business event data in accordance with this journal rule data to generate the journal data.

The journal rule data stored in the journal rule management unit 14 is changed by updating a multidimensional journal pattern master according to any change regarding an operation of a company including a change in specification of business and a change in accounting rule. The journal rule data can also be changed by changing an aggregation rule described later. Additionally, in a case where a type of an account title to be generated is changed, the journal rule can be changed.

The accounting management module 13 is a module that manages various kinds of data regarding accounting business of a company and manages the data according to the type of the journal data. As an example, the accounting management module 13 includes an A/R management module, A/P management module, a personnel compensation management module, a budget management module, a asset management module, a cash management module, an inventory management module, and a cost accounting management module. The journal data is allocated to any of the modules according to the type or a property of the applied journal rule and becomes a target for management.

The A/R management module is a module that performs credit management, such as trade accounts receivable and uncollected balance. For example, the A/R management module manages accounts receivable-trade (for example, trade accounts receivable), which is generated by sales figures, up to its collection. The A/P management module is a module that performs payable management, such as accounts payable and unpaid amount. For example, the A/P management module manages an accounts payable liability (for example, accounts payable) generated by purchase of a merchandise up to its payment. Additionally, the AET framework 15 increases and decreases these accounts and manages the balances. The AET framework 15 is a framework that performs build-up (plus) or build-down (minus) on an account to which a certain business transaction has been reflected and manages its entry. For example, the AET framework 15 manages a stock count (IN), a shipping count (OUT), a balance count (BAL), each amount of money, and a unit price (usually, a unit price of moving average) of a merchandise in the inventory management.

The personnel compensation management module is a module that performs any management regarding money for an employee or paid to the employee including a salary, a bonus, a retirement allowance, an allowance, insurance money, and a pension. The budget management module is a module that performs management regarding various budgets of the company. The asset management module is a module that performs management regarding various assets possessed by the company. The cash management module is a module that performs management regarding the cash possessed by the company. The inventory management module is a module that manages inventories of raw materials, products, merchandises, and the like that the company deals in and evaluation for money regarding the inventories. The cost accounting management module is a module that manages cost accounting of, for example, products, merchandises, and services that the company deals in.

The AET framework 15 converts the journal data into the ledger data in accordance with the aggregation rule managed by the aggregation rule management unit 16. There are 18 items, for example, a tangible fixed asset, an investment real estate, an intangible asset, and a financial asset, as account titles in the International Accounting Standards IFRS and 50 items, which is more than 18 items, in the Japanese Accounting Standards. The AET framework 15 determines the account titles to be generated based on, for example, the type of the accounting data to be generated and generates the ledger data of the account titles from the journal data. Although details are omitted, the ledger data can be further categorized and can be calculated as the aggregation data for each account title.

The system of the embodiment calculates the journal data, the ledger data, and the aggregation data for each account title as the accounting data. Hereinafter, a collection of these pieces of data will be referred to as a "multiaxial structure accounting data."

The slicer 17 dynamically distributes the multiaxial structure accounting data in accordance with the accounting standards (JGAAP, USGAAP, IFRS), an accounting level (for example, whole organization group (consolidated basis), a sub-group consolidated basis, and a single entity basis), accounting objectives (financial accounting/management accounting), and/or a currency for accounting (for example, yen, dollar, and yuan) to generate various kinds of accounting data or analysis data.

As one example, assume a case where the consolidated accounting data, the single entity accounting data, and various kinds of analysis data for the management accounting are generated. Pieces of ledger data related to a plurality of organizations in a business entity are distributed and stored in data folders (not illustrated) to generate the consolidated accounting data, and a consolidated financial statement for the whole organization (consolidated basis) of the business entity are generated based on the pieces of ledger data. The financial statements based on the International Accounting Standards and the financial statements based on the Japanese Accounting Standards can be simultaneously generated from one piece of consolidated/single entity accounting data. Additionally, the respective pieces of ledger data related to the plurality of organizations in the business entity are also distributed and stored in the data folders (not illustrated) to generate the single entity accounting data, and the single entity financial statements of each entity are generated.

Meanwhile, the ledger data related to only one organization in the business entity is distributed and stored only in the data folders (not illustrated) to generate the single entity accounting data and is used to generate the single entity financial statements for each entity.

Further, the ledger data is also distributed for analysis data for management accounting. For example, to generate the analysis data regarding sales figures by merchandise, the slicer 17 extracts data regarding a merchandise name or a merchandise categorization and data regarding sales amount of the merchandise from attribute data of the ledger data and distributes and stores the pieces of data in the data folders (not illustrated) to generate a table of sales figures by merchandise. In a case where data regarding sales figures by customer, sales figures by division, or profitability by merchandise is generated, the slicer 17 similarly distributes the pieces of data.

To organize the business event data in units of processes for journal entries, the record management unit 18 performs data processing to comprehensively manage the journal rules and the aggregation rules. The record management unit 18 virtually generates a plurality of recording departments, manages rules for journal entries processing for each recording department, and determines a journal pattern for each recording department. The record management unit 18 determines that certain business event data is assigned to which recording department. Then, in accordance with the determination, the journal rule data and the aggregation rule data are generated, and the journal rule management unit 14 and the aggregation rule management unit 16 are caused to store the journal rule data and the aggregation rule data. Thus, the business management system of the embodiment manages handling rules for journal entries in a plurality of the recording departments and a relationship between the business event data and the recording department by the record management unit 18. Thus, the business management system of the embodiment virtually generates the plurality of recording department. After that, the account titles of the accounting data required for the recording department are identified, and thus which data is required among the various kinds of business event data is determined. In accordance with the determination result, the above-described journal rule and aggregation rule are generated.

Thus, with the embodiment, the record management unit 18 generates the journal rule data and the aggregation data based on the accounting data generated in the virtual recording department. Advantages brought by the configuration will be described below.

Generally, there may be a case where the business event data as a source for the journal is divided into a plurality of pieces of journal data, further, one piece of journal data is further divided into a plurality of account titles, and further a certain account title is divided into a plurality of kinds of accounting data. For example, in a case where business event data regarding personnel expenses is present, there may be a case where the personnel expenses included in the business event data are divided into a direct labor cost and an indirect labor cost, and further the indirect labor cost is divided into a labor cost of a final product and a labor cost of a service. Additionally, there may be a case where one piece of journal data or ledger data should be distributed to a plurality of pieces of accounting data. Thus, in a case where one piece of business event data needs to be branched complicatedly, when the journal rule is attempted to be generated based on the business event data, the journal rule becomes complicated, making the subsequent maintenance and change in rule data difficult. In view of this, in the embodiment, the journal rule data and the aggregation rule data are generated in a way of going back to, for example, contents, the number of pieces, and the type of the accounting data to be generated. Accordingly, while the complication of the generated journal rule and aggregation rule is avoided, the journal rule and the aggregation rule can be easily maintained.

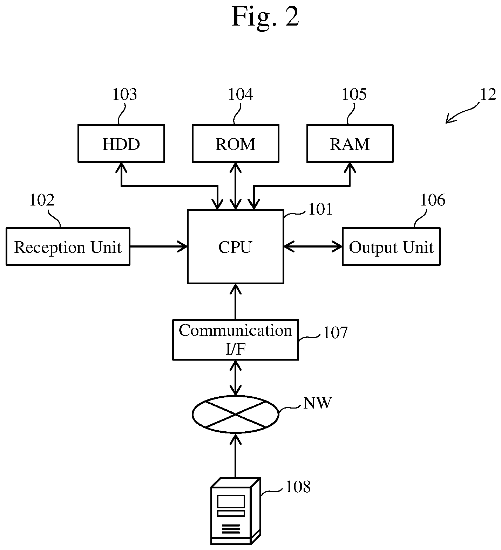

Fig. 2 is a block diagram illustrating an example of a hardware configuration of the business management system of the embodiment. As one example, the journalizing engine 12 includes a CPU 101, a reception unit 102, a hard disk drive (HDD) 103, a ROM 104, a RAM 105, an output unit 106, and a communication interface 107. As the configuration members illustrated in Fig. 2, identical ones that have been known in a general all-purpose computer are employable. The CPU 101 executes various procedures for journal entries by the journalizing engine 12 and a procedure for generation of the ledger data by the AET framework 15 in accordance with programs. The programs are stored in the HDD 103 and/or the ROM 104 and read by the CPU 101. The reception unit 102 is an interface that accepts the above-described business event data and inputs the business event data to the CPU 101. The output unit 106 is an interface that outputs the generated journal data and ledger data. The communication interface 107 is connected to an external server 108 and outputs various kinds of data generated as necessary to the external server 108.

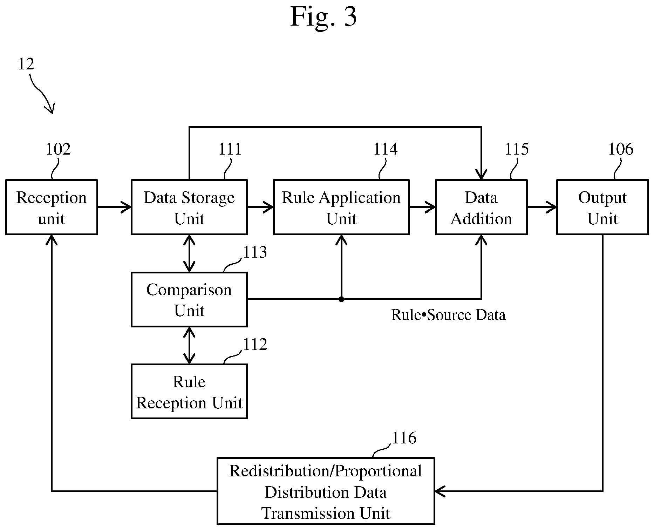

Next, a configuration of the journalizing engine 12 will be further described with reference to a function block diagram of Fig. 3. The journalizing engine 12 includes a data storage unit 111, a rule reception unit 112, a comparison unit 113, a rule application unit 114, a data addition unit 115, and a redistribution/proportional distribution data transmission unit 116.

The data storage unit 111 is a memory that temporarily stores the business event data received through the reception unit 102 to perform the journal entries. The rule reception unit 112 is an interface that accepts an input of the journal rule data from the journal rule management unit 14 and transfers the journal rule data to the comparison unit 113.

The comparison unit 113 compares the business event data stored in the data storage unit 111 with the journal rule data received through the rule reception unit 112 and determines the journal rule data fitted to the business event data. When the fitted rule is detected, the journal rule data is output to the rule application unit 114 and the data addition unit 115.

The rule application unit 114 applies the journal rule data output from the comparison unit 113 to the business event data stored in the data storage unit 111 and performs the journal entries in accordance with the journal rule data to generate the journal data. Additionally, the data addition unit 115 has a function that adds (associates) the journal rule data determined to fit and the business event data as the source data to (with) the generated journal data. The journal rule data may be associated with the journal data by simply storing the journal rule data in a journal data file or by giving the same ID to the corresponding journal data and the journal rule data and storing the journal data and the journal rule data in different databases.

The redistribution/proportional distribution data transmission unit 116 has a function that sends back the once generated rule and journal data to which the source data is added to the reception unit 102 again together with proportional distribution data. The reception unit 102 divides the journal data in accordance with the proportional distribution data and sets the journal data as the target for journal entries again.

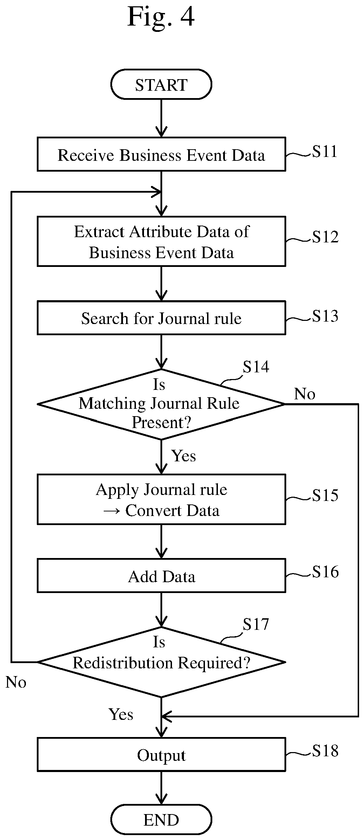

Next, the procedure for generating the journal data in this business management system will be described with reference to a flowchart of Fig. 4.

First, after the business event data is extracted from the bird's-eye view of business or the scenario chart and is input to the business management module 10, the business event data is input to the journalizing engine 12 via the filtering module 11 (Step S11). The data storage unit 111 in the journalizing engine 12 stores the input business event data.

The comparison unit 113 in the journalizing engine 12 extracts the attribute data of the business event data stored in the data storage unit 111 (Step S12) and searches for the journal rule data matching the extracted attribute data from the journal rule data received through the rule reception unit 112 (Step S13). When the matching journal rule data is detected (Yes in Step S14), the rule application unit 114 applies the journal rule data to the business event data and converts the business event data in accordance with the journal rule data to generate the journal data (Step S15).

Subsequently, the data addition unit 115 adds (associates) the journal rule data as the criterion for the journal entries and the business event data as the source data to (with) the generated journal data (Step S16). Then, whether the journal data thus generated needs to be further redistributed for, for example, proportional distribution or not is determined (Step S17). When the redistribution is required, the journal data is re-transmitted to the reception unit 102 together with the proportional distribution data (Step S18). Whether the redistribution is required is determined based on, for example, the type of the data included in the journal data, including whether the journal data includes the data target for proportional distribution.

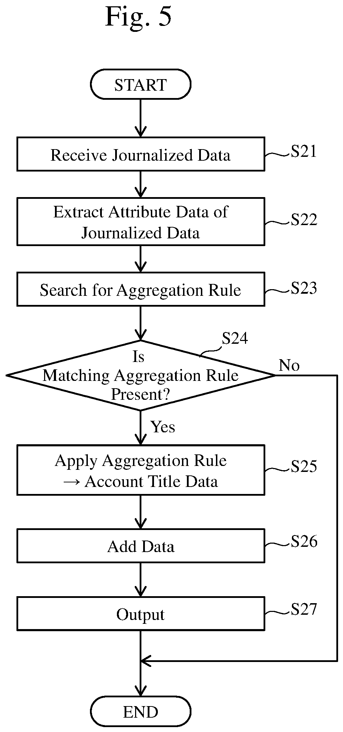

Next, the following describes the procedure for generating the ledger data from the journal data with reference to a flowchart of Fig. 5.

When the journalizing engine 12 generates the journal data, the journal data is input to the AET framework 15 (Step S21). The AET framework 15 extracts the attribute data of the input journal data (Step S22) and searches for the aggregation rule data matching the attribute data from inside of the aggregation rule management unit 16 (Step S23). When the matching aggregation rule data is searched (Yes in Step S24), the aggregation rule is applied to the journal data and the ledger data is generated based on the journal data (Step S25). When the ledger data is generated, the aggregation rule data, which is the source of the generation, the journal rule data added to the journal data, which is further source thereof, and the business event data, which is the source data of the journal data, are added to (associated with) the ledger data (Step S26). The generated ledger data is output from the AET framework 15 and is further output to an aggregation unit (not illustrated) to generate the aggregation data for each account title (Step S27).

As described above, with the business management system of the embodiment, the business event data is input to the journalizing engine 12, the business event data is converted into the journal data based on the journal rule, and the journal rule, which is the basis of the journal entries of the journal data, and the business event data as the source data are added to the journal data. In view of this, even in the case where the specification of the business management system and the accounting rule are changed, the computer programs for the business management system need not to be changed, and it is only necessary to rewrite the journal rule by updating the multidimensional journal pattern master. As long as a situation of the change in journal rule data is grasped, consistency of the data between before and after the program change can be maintained, and therefore the data is easily validated at a later date.

Further, with the embodiment, the journal data thus generated is further input to the AET framework 15 and is converted into the ledger data based on the aggregation data. In the conversion into this ledger data as well, in addition to the aggregation data, the journal data during the journalizing of the journal data and the business event data as the source data are added to the generated ledger data. Thus, it is clear what sort of rule based on which the ledger data has been generated and the contents of the source data are also clear, and therefore the data is easily validated at a later date.

The record management unit 18 can generate or edit the above-described journal rule and aggregation rule in accordance with the type of the accounting data desired to be generated. For example, in a case where the accounting rule is changed or generation of accounting data based on a currency not currently dealt is required, changing the journal rule and the aggregation rule according to this by updating the multidimensional journal pattern master allows easily handling the change in accounting rule or the like and also easily validating the consistency of the data between before and after the change.

While the embodiments of the present invention have been described, these embodiments have been presented by way of examples, and are not intended to limit the scope of the invention. The novel embodiments described herein can be embodied in a variety of other configurations, and various omissions, substitutions, and changes can be made without departing from the gist of the invention. These embodiments and their modifications are included in the scope of the invention described in the claims and their equivalents as well as included in the scope and the gist of the invention.

### Reference Signs List

- 10: Business management module
- 11: Filtering module
- 12: Journalizing engine
- 13: Accounting management module
- 14: Journal rule management unit
- 15: AET framework
- 16: Aggregation rule management unit
- 17: Slicer
- 18: Record management unit

## Claims

1. A business management system comprising:
a reception unit configured to receive business event data;
a journal rule management unit configured to manage a journal rule to journalize the business event data;
a journalizing engine configured to journalize the business event data in accordance with the journal rule to generate journal data; and
a first output unit configured to associate the journal rule and the business event data with the journal data generated by the journalizing engine and output the journal data.

2. The business management system according to claim 1, further comprising:
an aggregation rule management unit configured to manage an aggregation rule for data processing on the journal data;
an AET framework configured to perform the data processing on the journal data in accordance with the aggregation rule to generate ledger data; and
a second output unit configured to associate the journal rule, the aggregation rule, and the business event data with the ledger data and output the ledger data.

3. The business management system according to claim 2, further comprising a slicer configured to distribute the ledger data to a plurality of pieces of accounting data.

4. The business management system according to claim 3,
wherein the slicer is configured to distribute one piece of the ledger data to the plurality of pieces of accounting data.

5. The business management system according to claim 2, further comprising
an record management unit configured to determine the journal rule and the aggregation rule based on accounting data to be obtained in each virtual recording department.

6. The business management system according to claim 5,
wherein the record management unit is configured to determine the journal rule and the aggregation rule based on an account title included in the accounting data to be obtained in each of the recording departments.

7. The business management system according to claim 1,
wherein the journalizing engine is configured to extract attribute data of the business event data, apply the journal rule matching the attribute data to the business event data, and convert the business event data in accordance with the journal rule to generate the journal data.

8. The business management system according to claim 1,
wherein the journalizing engine is configured to determine whether the generated journal data needs to be redistributed, and when the redistribution is required, the journal data is re-transmitted to the reception unit together with proportional distribution data.

9. The business management system according to claim 8,
wherein the journalizing engine is configured to determine whether the redistribution is required based on a type of data included in the journal data.

10. A business management method comprising:
receiving business event data through a reception unit to a computer;
journaling the business event data using the computer in accordance with a journal rule to journalize the business event data to generate journal data; and
associating the journal rule and the business event data with the journal data generated by the computer and outputting the journal data from an output unit.

11. The business management method according to claim 10, further comprising:
performing data processing on the journal data in accordance with an aggregation rule for the data processing on the journal data to generate ledger data by the computer; and
associating the journal rule, the aggregation rule, and the business event data with the ledger data and outputting the ledger data from the output unit.

12. The business management method according to claim 11, further comprising
distributing the ledger data to a plurality of pieces of accounting data.

13. The business management method according to claim 12,
wherein the distributing distributes one piece of the ledger data to the plurality of pieces of accounting data.

14. The business management method according to claim 11, further comprising
determining the journal rule and the aggregation rule based on accounting data to be obtained in each virtual recording department.

15. The business management method according to claim 14,
wherein the journal rule and the aggregation rule are determined in accordance with an account title included in the accounting data to be obtained in each of the recording departments.
